(19) Europäisches Patentamt
European Patent Office
Office européen des brevets

(11) **EP 3 049 787 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **14766464.3**

(22) Anmeldetag: **15.09.2014**

(51) Int Cl.:
**G01M 3/22** *(2006.01)* **G01M 3/20** *(2006.01)*
**F04B 41/06** *(2006.01)*

(86) Internationale Anmeldenummer:
**PCT/EP2014/069584**

(87) Internationale Veröffentlichungsnummer:
**WO 2015/043993 (02.04.2015 Gazette 2015/13)**

(54) **EVAKUIERUNG EINER FOLIENKAMMER**

EVACUATION OF A FILM CHAMBER

CRÉATION DE VIDE DANS UNE CHAMBRE À PAROIS SOUPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2013 DE 102013219464**

(43) Veröffentlichungstag der Anmeldung:
**03.08.2016 Patentblatt 2016/31**

(73) Patentinhaber: **Inficon GmbH**
**50968 Köln (DE)**

(72) Erfinder:
• **DECKER, Silvio**
**50999 Köln (DE)**
• **DAUENHAUER, Michael**
**50937 Köln (DE)**

• **WETZIG, Daniel**
**50999 Köln (DE)**
• **HJALMAR, Bruhns**
**53115 Bonn (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A1-01/46667      WO-A2-2013/072173**
**US-A- 4 791 806      US-A- 5 107 697**
**US-A- 5 131 263      US-A1- 2009 208 649**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 049 787 B1

**Beschreibung**

Die Erfindung betrifft eine Vorrichtung und ein Verfahren zur Evakuierung einer Folienkammer.

Folienkammern bestehen aus einem flexiblen, weichen Material - meist Folien - und werden in der Verpackungslecksuche eingesetzt. In die Folienkammer wird ein auf ein Leck zu untersuchender Prüfling gegeben. Bei dem Prüfling handelt es sich meist um eine Lebensmittelverpackung aus einem ebenfalls flexiblen Material. Die den Prüfling umgebende Folienkammer wird evakuiert. Anschließend werden der Druck oder das Gas in der Folienkammer überwacht, um die Dichtigkeit des Prüflings zu testen und ein mögliches Leck in dem Prüfling zu erkennen.

Bislang werden Folienkammern mit Vakuumpumpen evakuiert, die ein großes Saugvermögen aufweisen und einen geringen Enddruck erzielen. Derartige Pumpen haben ein großes Gewicht und benötigen eine hohe elektrische Leistung zum Betrieb.

Kleinere, leichtere Pumpen weisen entweder ein großes Saugvermögen auf oder können einen geringen Druck erzielen und sind daher als alleiniger Ersatz für die herkömmlichen Pumpen ungeeignet.

WO 01/46667 A1 beschreibt einen Folien-Lecksucher, der zwei jeweils in einem Rahmen eingespannte Folien aufweist, die bei eingelegtem Prüfling einen Testraum begrenzen, und der mit zwei Vakuumpumpen ausgerüstet ist, bei welchem zunächst der Testraum evakuiert und nach dem Evakuierbetrieb auf Lecksuchbetrieb umgeschaltet wird.

WO 2013/072173 A2 beschreibt eine Vorrichtung zur Lecksuche an einem Prüfling, mit einer evakuierbaren Prüfkammer für den Prüfling. Die Prüfkammer weist mindestens einen Wandbereich aus einem flexiblen Material auf. Zu einer genaueren Leckagedetektion wird der Verlauf des Totaldruckanstiegs innerhalb der Prüfkammer gemessen.

Der Erfindung liegt die Aufgabe zugrunde, eine Evakuierungsvorrichtung sowie ein entsprechendes Verfahren zum Evakuieren einer Folienkammer bereitzustellen, um mit kleineren Pumpen ein großes Saugvermögen und einen geringen Enddruck zu erzielen.

Die erfindungsgemäße Vorrichtung ist definiert durch die Merkmale von Anspruch 1.

Demnach wird die Folienkammer von einem Pumpsystem mit mindestens zwei parallelgeschalteten und jeweils mit der Folienkammer verbundenen Vakuumpumpen evakuiert. Die beiden Vakuumpumpen sind zur abwechselnden Evakuierung der Folienkammer ausgebildet, das heißt, dass sie abwechselnd betrieben oder abwechselnd mit der Folienkammer verbunden werden. Alternativ ist denkbar, dass die beiden Vakuumpumpen durch eine gemeinsame Rohrleitung mit der Folienkammer verbunden sind, wobei ein Ventil oder ein Schaltelement die beiden Vakuumpumpen abwechselnd mit der gemeinsamen Rohrleitung verbinden kann.

Das Saugvermögen der ersten Vakuumpumpe ist größer als dasjenige der zweiten Vakuumpumpe, wobei der von der zweiten Vakuumpumpe erzielbare Enddruck geringer ist als derjenige der ersten Vakuumpumpe.

Vakuumpumpen sind also für sich genommen jeweils leichter als die bislang eingesetzten schweren Vakuumpumpen. Während bislang eine große Vakuumpumpe eingesetzt wurde, die sowohl den gewünschten Enddruck als auch das erforderliche Saugvermögen erzielen kann, basiert die Erfindung nunmehr auf dem Gedanken, je eine Vakuumpumpe für das gewünschte Saugvermögen und eine für den zu erzielenden Enddruck einzusetzen. Diese beiden Vakuumpumpen werden nacheinander abwechselnd betrieben. Die Vakuumpumpe mit dem höheren Saugvermögen wird dabei zuerst eingesetzt, um die Folienkammer grob zu evakuieren. Die andere Vakuumpumpe, die den geringeren Enddruck erzielen kann, wird anschließend eingesetzt, um den Enddruck zu erzielen.

Dabei ist es von Vorteil, wenn zwischen der zweiten Vakuumpumpe und der Folienkammer eine Pufferkammer vorgesehen ist, die von der zweiten Vakuumpumpe evakuiert wird, während die erste Vakuumpumpe die Folienkammer evakuiert. Wenn also die zweite Vakuumpumpe nicht mit der Folienkammer verbunden ist, evakuiert sie die Pufferkammer und erzielt dabei vorzugsweise bereits den in der Folienkammer gewünschten Enddruck. Anschließend wird die Folienkammer von der Pufferkammer und gegebenenfalls auch noch von der zweiten Vakuumpumpe evakuiert. Dadurch kann die Zeit, mit der die Folienkammer auf den gewünschten Enddruck gebracht wird, erheblich reduziert werden.

Das Saugvermögen der ersten Vakuumpumpe beträgt vorzugsweise mehr als der Wert des Ausgangsvolumens der Folienkammer pro Sekunde (also in Litern pro Sekunde, z. B. bei 1 l Ausgangsvolumen mehr als 1 l/s) und deren Enddruck mehr als 50 Millibar (mbar). Das Saugvermögen der zweiten Vakuumpumpe beträgt vorzugsweise weniger als der Wert des vorevakuierten Restvolumens der Folienkammer pro Sekunde (also in l/s, z. B. bei 250 cm$^3$ weniger als 0,25 l/s) und deren zu erzielender Enddruck weniger als 50 mbar. Derartige Vakuumpumpen sind jeweils ausreichend leicht und mobil einsetzbar und können dennoch in der erfindungsgemäßen Kombination eine Folienkammer ausreichend schnell auf den erforderlichen Enddruck evakuieren.

Bei der ersten Vakuumpumpe kann es sich um mindestens eine Strahlpumpe, beispielsweise eine Venturipumpe, handeln. Denkbar ist dabei, dass es sich entweder um genau eine Strahlpumpe oder um mehrere seriell nacheinander geschaltete Strahlpumpen handelt.

Die Pufferkammer zwischen dem zweiten Anschluss und der zweiten Vakuumpumpe sollte vorzugsweise ein evakuierbares Volumen aufweisen, das im Bereich zwischen dem sechsfachen und dem achtfachen Volumen des Folienkammervolumens und vorzugsweise im Bereich zwischen dem neunfachen bis elffachen Volumen des Folienkammervolumens liegt.

Bei der Variante, dass die beiden Vakuumpumpen durch eine gemeinsame Rohrleitung mit der Folienkammer verbunden sind kann ein mindestens drei Anschlüsse aufweisendes Ventil vorgesehen sein, um die beiden Vakuumpumpen und die Rohrleitung beziehungsweise die Folienkammer zu verbinden.

Bei dem Ventil kann es sich vorzugsweise um ein 3/2-Wegeventil handeln. Der erste Anschluss des Ventils ist mit einer ersten Vakuumpumpe verbunden. Der zweite Anschluss ist mit einer zweiten Vakuumpumpe verbunden. Der dritte Anschluss dient zum Anschluss der Folienkammer. Das Ventil weist mindestens zwei Schaltstellungen auf. In der ersten Schaltstellung verbindet das Ventil den ersten und den dritten Anschluss miteinander, das heißt also die erste Vakuumpumpe und die Folienkammer. In der zweiten Schaltstellung verbindet das Ventil den zweiten und den dritten Anschluss miteinander, das heißt also die zweite Vakuumpumpe und die Folienkammer. Eine Schaltstellung, bei der der erste und der zweite Anschluss des Ventils miteinander verbunden werden, existiert nicht. Die erste Vakuumpumpe wird also niemals mit der zweiten Vakuumpumpe verbunden. Vielmehr werden die beiden Vakuumpumpen abwechselnd an die Folienkammer geschaltet, um diese nacheinander zu evakuieren.

Bei dem erfindungsgemäßen Verfahren zur Evakuierung einer Folienkammer nach Anspruch 12 wird zunächst die Folienkammer von der ersten Vakuumpumpe mit dem größeren Saugvermögen evakuiert. Hierzu kann die erste Vakuumpumpe mit der Folienkammer verbunden und die zweite Vakuumpumpe von der Folienkammer getrennt werden. Anschließend wird die zweite Vakuumpumpe genutzt, um den geringen Enddruck in der Folienkammer zu erreichen. Hierzu kann die erste Vakuumpumpe von der Folienkamer getrennt und die zweite Vakuumpumpe mit der Folienkammer verbunden werden. Von Vorteil ist es dabei, wenn vor dem Verbinden der zweiten Vakuumpumpe mit der Folienkammer eine Pufferkammer von der zweiten Vakuumpumpe evakuiert wird. Währenddessen kann beispielsweise die Folienkammer bereits von der ersten Vakuumpumpe mit dem größeren Saugvermögen evakuiert werden.

Im Folgenden wird anhand der Figuren ein Ausführungsbeispiel der Erfindung näher erläutert. Es zeigen:

Figur 1     eine schematische Darstellung der Vorrichtung in einem ersten Betriebszustand,

Figur 2     die Darstellung nach Figur 1 in einem zweiten Betriebszustand und

Figur 3     die Anordnung nach Figur 1 in einem dritten Betriebszustand.

Das zentrale Kernelement des dargestellten Ausführungsbeispiels ist das 3/2-Wegeventil 12 mit drei Anschlüssen 14, 16, 18 und zwei Schaltwegen. Mit dem ersten Anschluss 14 ist eine erste Vakuumpumpe 20 in Form einer Venturipumpe verbunden. Mit dem zweiten Anschluss 16 ist eine zweite Vakuumpumpe 22 in Form einer Verdrängerpumpe verbunden. Die den zweiten Anschluss 16 mit der zweiten Vakuumpumpe 22 verbindende Rohrleitung 24 ist gasleitend mit einer Pufferkammer 26 verbunden. Der dritte Anschluss 18 ist mit der Folienkammer 28 durch eine Rohrleitung 25 verbunden. Zwischen der Folienkammer 28 und dem dritten Anschluss 18 ist in der Rohrleitung 25 ein Sperrventil 30 angeordnet. Alternativ ist denkbar, dass jede der beiden Vakuumpumpen 20, 22 durch eine eigene, separate Rohrleitung mit der Folienkammer 28 verbunden ist.

Die Folienkammer 28 besteht aus zwei Folienlagen 32, 34, zwischen denen der Prüfling 36 angeordnet ist.

Die Venturipumpe 20 ist mit einem Ventil 38 verbunden, um den Betrieb der Pumpe 20 steuern zu können.

Die Erfindung basiert auf dem Gedanken, eine Pumpe mit hohem Saugvermögen und dafür jedoch hohem Enddruck mit einer Pumpe mit niedrigem Enddruck und dafür jedoch niedrigem Saugvermögen zu kombinieren. Diese beiden Pumpen 20, 22 werden wahlweise abwechselnd über das 3/2-Wegeventil 12 mit der Folienkammer 28 verbunden, um diese zu evakuieren.

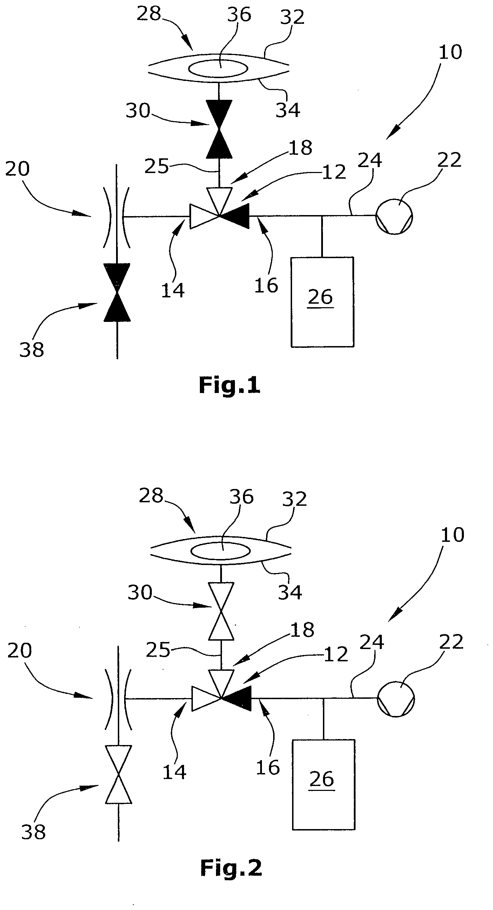

Dabei wird zu Beginn zunächst, wie in Figur 1 dargestellt, die zweite Vakuumpumpe 22 betrieben, um die Pufferkammer 26 zu evakuieren. Das 3/2-Wegeventil 12 befindet sich in seiner ersten Schaltstellung, in der der erste Anschluss mit dem dritten Anschluss verbunden ist. Die erste Vakuumpumpe 20 evakuiert die Folienkammer 28 jedoch noch nicht, weil das Sperrventil 30 gesperrt ist (schwarz dargestellt). In den Figuren sind geöffnete Ventilwege weiß und gesperrte Ventilwege schwarz dargestellt.

Gemäß Figur 1 wird die Pufferkammer 26 von der zweiten Vakuumpumpe 22 also bereits auf einem niedrigen Druck und möglichst auf den in der Folienkammer 28 zu erzielenden Enddruck evakuiert, während die Folienkammer 28 noch vorbereitet oder mit dem Prüfling 36 bestückt wird.

Anschließend wird, wie in Figur 2 dargestellt, dass Steuerventil 38 für die erste Vakuumpumpe 20 geöffnet, um diese in Betrieb zu nehmen. Das 3/2-Wegeventil 12 verbleibt in der ersten Schaltstellung und das Sperrventil 30 wird geöffnet, so dass die erste Vakuumpumpe 20 nunmehr die Folienkammer 28 mit dem großen Saugvermögen evakuiert. Während der Evakuierung mit dem großen Saugvermögen schmiegt sich die Folie dicht um den Prüfling 36 und das umgebende, freie Volumen innerhalb der Folienkammer 28 wird auf wenige $cm^3$ verringert.

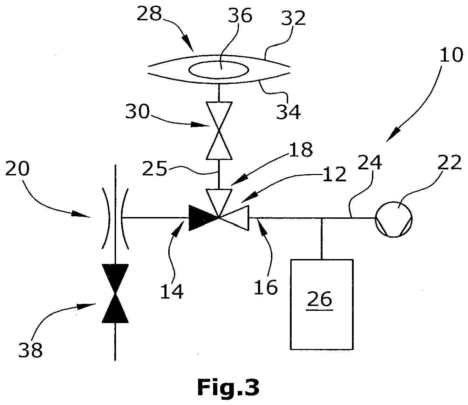

Um die Folienkammer 28 auf den zu erzielenden, gewünschten Enddruck zu bringen gelangt der dritte Betriebszustand der erfindungsgemäßen Vorrichtung gemäß Figur 3 zur Anwendung. Dabei wird das 3/2-Wegeventil in die zweite Schaltstellung gebracht, in der der zweite Anschluss 16 mit dem dritten Anschluss 18 verbunden ist. Die zweite Vakuumpumpe 22 und die Pufferkammer 26 sind dann mit der Folienkammer 28 gasleitend verbunden, weil das Sperrventil 30 geöffnet bleibt. Das Steuerventil 38 für die erste Vakuumpumpe 20 wird geschlossen, um die erste Vakuumpumpe außer Betrieb zu nehmen. Bei Umschalten des 3/2-Wegeventils von dem ersten in den zweiten Betriebszustand wird die Folienkammer 28 schlagartig in die Pufferkammer 26 evakuiert. Mit Hilfe der zweiten Vakuumpumpe 22 kann dann innerhalb kurzer Zeit der von der zweiten Vakuumpumpe 22 zu erzielende, gewünschte Enddruck erreicht werden.

Während mit der ersten Vakuumpumpe 20 (Venturipumpe) nur ein Enddruck in Höhe von 200 mbar erzielt werden kann, kann mit der zweiten Vakuumpumpe 22 ein Enddruck von nur 20 mbar erreicht werden. Während des zweiten Betriebszustandes gemäß Figur 2 evakuiert die erste Vakuumpumpe 20 die Folienkammer 28 bis auf ein freies Volumen von 50 cm$^3$. Die Pufferkammer 26 weist ein Puffervolumen von 500 cm$^3$ auf. Daraus resultiert in der Folienkammer nach Evakuierung mit der zweiten Vakuumpumpe 22 gemäß Figur 3 ein Enddruck von:

$$p = (200 \text{ mbar} \cdot 50 \text{ cm}^3 + 20 \text{ mbar} \cdot 500 \text{ cm}^3) / (550 \text{ cm}^3) = 36 \text{ mbar}.$$

**Patentansprüche**

1. Vorrichtung (10) zur Evakuierung einer Folienkammer (28) mit einem Pumpsystem mit mindestens zwei Vakuumpumpen (20, 22), die zur abwechselnden Evakuierung der Folienkammer (28) ausgebildet sind, wobei das Saugvermögen der ersten Vakuumpumpe (20) größer ist als das der zweiten Vakuumpumpe (22) und wobei der von der zweiten Vakuumpumpe (22) erzielbare Enddruck geringer ist als derjenige der ersten Vakuumpumpe (20), **dadurch gekennzeichnet, dass** eine die Folienkammer (28) und die zweite Vakuumpumpe (22) verbindende Rohrleitung (24, 25) mit einer Pufferkammer (26) verbunden ist.

2. Vorrichtung (10) nach Anspruch 1, **dadurch gekennzeichnet, dass** jede der beiden Vakuumpumpen (20, 22) durch eine separate Rohrleitung mit der Folienkammer (28) verbunden ist.

3. Vorrichtung (10) nach Anspruch 1, **dadurch gekennzeichnet, dass** die beiden Vakuumpumpen (20, 22) durch eine gemeinsame Rohrleitung (25) mit der Folienkammer (28) verbunden sind.

4. Vorrichtung (10) nach dem vorhergehenden Anspruch, **dadurch gekennzeichnet, dass** das Pumpsystem ein Ventil (12) mit mindestens drei Anschlüssen aufweist, dessen
   erster Anschluss (14) mit der ersten Vakuumpumpe (20),
   zweiter Anschluss (16) mit der zweiten Vakuumpumpe (22),
   dritter Anschluss (18) mit der Folienkammer (28) verbindbar ist und dessen
   erste Schaltstellung den ersten (14) und den dritten Anschluss (18) und dessen zweite Schaltstellung den zweiten (16) und den dritten Anschluss (18) mit einander verbindet.

5. Vorrichtung (10) nach dem vorhergehenden Anspruch, **dadurch gekennzeichnet, dass** es sich bei dem Ventil (12) um ein 3/2-Wegeventil handelt.

6. Vorrichtung (10) nach einem der vorhergehenden Ansprüche, **dadurch gekennzeichnet, dass** die Pufferkammer (26) ein Volumen im Bereich des sechsfachen bis fünfzehnfachen Volumens der Folienkammer und vorzugsweise im Bereich des neunfachen bis elffachen Volumens der Folienkammer aufweist.

7. Vorrichtung (10) nach einem der vorhergehenden Ansprüche, **dadurch gekennzeichnet, dass** das Saugvermögen der ersten Vakuumpumpe (20) größer als der Wert des Ausgangsvolumens der Folienkammer pro Sekunde und der von der ersten Vakuumpumpe (20) erzielbare Enddruck größer als 50 mbar ist.

8. Vorrichtung (10) nach einem der vorhergehenden Ansprüche, **dadurch gekennzeichnet, dass** das Saugvermögen der zweiten Vakuumpumpe (22) geringer als der Wert des vorevakuierten Restvolumens der Folienkammer pro Sekunde und der von der zweiten Vakuumpumpe (22) erzielbare Enddruck geringer als 50 mbar ist.

9. Vorrichtung (10) nach einem der vorhergehenden Ansprüche, **dadurch gekennzeichnet, dass** die erste Vakuumpumpe (20) eine oder mehrere Strahlpumpen aufweist.

**10.** Vorrichtung (10) nach einem der vorhergehenden Ansprüche, **dadurch gekennzeichnet, dass** mindestens eine der Vakuumpumpen (20, 22) eine mit der Folienkammer (28) verbundene Rohrleitung (25) mit einem Sperrventil (30) aufweist.

**11.** Verfahren zur Evakuierung einer Folienkammer (28) mit der Vorrichtung (10) nach einem der vorhergehenden Ansprüche, **gekennzeichnet durch** ein abwechselndes Evakuieren der Folienkammer (28) mit der ersten Vakuumpumpe (20) und mit der zweiten Vakuumpumpe (22).

**12.** Verfahren nach dem vorhergehenden Anspruch, **dadurch gekennzeichnet, dass** vor dem Evakuieren mit der zweiten Vakuumpumpe (22) die zweite Vakuumpumpe eine zwischen dieser und dem zweiten Anschluss (16) angeordnete Pufferkammer (26) evakuiert.

**13.** Verfahren nach einem der vorhergehenden Ansprüche zur Evakuierung mit der Vorrichtung nach Anspruch 4 oder 5, **dadurch gekennzeichnet, dass** vor dem Evakuieren mit der ersten Vakuumpumpe das Ventil (12) in die erste Schaltstellung und vor dem Evakuieren mit der zweiten Vakuumpumpe das Ventil (12) in die zweite Schaltstellung geschaltet wird.


**Claims**

**1.** A device (10) for evacuating a film chamber (28) using a pump system that comprises at least two vacuum pumps (20, 22), designed to evacuate the film chamber (28) alternately, wherein the suction capacity of the first vacuum pump (20) is greater than that of the second vacuum pump (22) and wherein the end pressure achievable by the second vacuum pump (22) is less than that of the first vacuum pump (20),
**characterized in that** a pipeline (24, 25) connecting the film chamber (28) and the second vacuum pump (22) is connected with a buffer chamber (26).

**2.** The device (10) of claim 1, **characterized in that** each of the two vacuum pumps (20, 22) is connected with the film chamber (28) via a separate pipeline.

**3.** The device (10) of claim 1, **characterized in that** the two vacuum pumps (20, 22) are connected with the film chamber (28) via a common pipeline (25).

**4.** The device (10) of the preceding claim, **characterized in that** the pump system has a valve (12) with at least three ports, of which the first port (14) can be connected with the first vacuum pump (20),
the second port (16) can be connected with the second vacuum pump (22), the third port (18) can be connected with the film chamber (28), and of which
the first switching position connects the first port (14) with the third port (18), and the second switching position connects second port (16) with the third port (18).

**5.** The device (10) of the preceding claim, **characterized in that** the valve (12) is a 3/2-way valve.

**6.** The device (10) of one of the preceding claims, **characterized in that** the buffer chamber (26) has a volume in the range of six to fifteen times the volume of the film camber and preferably in the range of nine to eleven times the volume of the film chamber.

**7.** The device (10) of one of the preceding claims, **characterized in that** the suction capacity of the first vacuum pump (20) is higher than the initial volume of the film chamber, and that the end pressure achievable by the first vacuum pump (20) is higher than 50 mbar.

**8.** The device (10) of one of the preceding claims, **characterized in that** the suction capacity of the second vacuum pump (22) is less than the pre-evacuated residual volume of the film chamber, and that the end pressure achievable by the second vacuum pump (22) is less than 50 mbar.

**9.** The device (10) of one of the preceding claims, **characterized in that** the first vacuum pump (20) comprises one or a plurality of jet pumps.

**10.** The device (10) of one of the preceding claims, **characterized in that** at least one of the vacuum pumps (20, 22) comprises a pipeline (25) connecting the pump with the film chamber (28) and comprising a stop valve (30).

11. A method for evacuating a film chamber (28) using the device (10)of one of the preceding claims, **characterized by** an alternating evacuation of the film chamber (28) by means of the first vacuum pump (20) and the second vacuum pump (22).

12. The method of the preceding claim, **characterized in that**, prior to the evacuation by means of the second vacuum pump (22), the second vacuum pump evacuates a buffer chamber (26) arranged between the same and the second port (16).

13. The method of one of the preceding claims, for evacuation using the device of claim 4 or 5, **characterized in that**, prior to the evacuation by means of the first vacuum pump, the valve (12) is switched to the first switching position, and wherein the valve (12) is switched to the second switching position prior to the evacuation by means of the second vacuum pump.


**Revendications**

1. Dispositif (10) destiné à faire le vide dans une chambre à parois souples (28) avec un système de pompage avec au moins deux pompes à vide (20, 22) qui sont constituées pour faire le vide dans la chambre à parois souples (28), le pouvoir d'aspiration de la première pompe à vide (20) étant supérieur à celui de la deuxième pompe à vide (22), et la pression finale pouvant être obtenue par la deuxième pompe à vide (22) étant inférieure à celle de la première pompe à vide (20),
   **caractérisé en ce**
   **qu'**une conduite tubulaire (24, 25) raccordant la chambre à parois souples (28) et la deuxième pompe à vide (22) est raccordée à une chambre tampon (26).

2. Dispositif (10) selon la revendication 1, **caractérisé en ce que** chacune des deux pompes à vide (20, 22) est raccordée à la chambre à parois souples (28) par une conduite tubulaire séparée.

3. Dispositif (10) selon la revendication 1, **caractérisé en ce que** les deux pompes à vide (20, 22) sont raccordées à la chambre à parois souples (28) par une conduite tubulaire (25) commune.

4. Dispositif (10) selon la revendication précédente, **caractérisé en ce que** le système de pompage présente une vanne (12) avec au moins trois raccords, dont
   le premier raccord (14) peut être raccordé à la première pompe à vide (20),
   le deuxième raccord (16) peut être raccordé à la deuxième pompe à vide (22),
   le troisième raccord (18) peut être raccordé à la chambre à parois souples (28), et dont
   la première position de commutation raccorde entre eux le premier raccord (14) et le troisième raccord (18), et dont
   la deuxième position de commutation raccorde entre eux le deuxième raccord (16) et le troisième raccord (18).

5. Dispositif (10) selon la revendication précédente, **caractérisé en ce que**, concernant la vanne (12), il s'agit d'une vanne 3/2 voies.

6. Dispositif (10) selon l'une des revendications précédentes, **caractérisé en ce que** la chambre tampon (26) présente un volume dans la plage de six à quinze fois le volume de la chambre à parois souples et de préférence dans la plage de neuf à onze fois le volume de la chambre à parois souples.

7. Dispositif (10) selon l'une des revendications précédentes, **caractérisé en ce que** le pouvoir d'aspiration de la première pompe à vide (20) est supérieur à la valeur du volume de sortie de la chambre à parois souples par seconde, et la pression finale pouvant être obtenue par la première pompe à vide (20) est supérieure à 50 mbar.

8. Dispositif (10) selon l'une des revendications précédentes, **caractérisé en ce que** le pouvoir d'aspiration de la deuxième pompe à vide (22) est inférieur à la valeur du volume résiduel pré-vidé de la chambre à parois souples par seconde, et la pression finale pouvant être obtenue par la deuxième pompe à vide (22) est inférieure à 50 mbar.

9. Dispositif (10) selon l'une des revendications précédentes, **caractérisé en ce que** la première pompe à vide (20) présente une ou plusieurs pompes à jet.

**10.** Dispositif (10) selon l'une des revendications précédentes, **caractérisé en ce qu'**au moins une des pompes à vide (20, 22) présente une conduite tubulaire (25), raccordée à la chambre à parois souples (28), avec une vanne d'arrêt (30).

**11.** Procédé destiné à faire le vide dans une chambre à parois souples (28) avec le dispositif (10) selon l'une des revendications précédentes, **caractérisé par** une création de vide alternée dans la chambre à parois souples (28) avec la première pompe à vide (20) et avec la deuxième pompe à vide (22).

**12.** Procédé selon la revendication précédente, **caractérisé en ce que**, avant la création de vide avec la deuxième pompe à vide (22), la deuxième pompe à vide fait le vide dans une chambre tampon (26) disposée entre elle et le deuxième raccord (16).

**13.** Procédé selon l'une des revendications précédentes destiné à faire le vide avec le dispositif selon la revendication 4 ou 5, **caractérisé en ce que**, avant la création de vide avec la première pompe à vide, la vanne (12) est commutée dans la première position de commutation et, avant la création de vide avec la deuxième pompe à vide, la vanne (12) est commutée dans la deuxième position de commutation.

**EP 3 049 787 B1**

Fig.1

Fig.2

8

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0146667 A1
- WO 2013072173 A2